# EUROPEAN PATENT SPECIFICATION

(11) **EP 2 330 675 B1**
(45) Date of publication and mention of the grant of the patent: **22.08.2018**
(21) Application number: 09813154.3
(22) Date of filing: 11.09.2009
(51) Int. Cl.: H01M 10/05, H01M 10/0525, H01M 10/0567, H01M 10/0568, H01M 10/42, H01M 10/04, H01M 4/04, H01M 4/139, H01M 4/13, H01M 4/62

(54) **SECONDARY BATTERY**
SEKUNDÄRBATTERIE
BATTERIE SECONDAIRE

(30) Priority: 11.09.2008 JP 2008233452; 04.06.2009 JP 2009134601
(43) Date of publication of application: 08.06.2011
(73) Proprietor: NEC Corporation, Minato-ku Tokyo 108-8001 (JP); NEC Energy Devices, Inc., Chuo-ku Sagamihara-shi, Kanagawa 252-5298 (JP)
(72) Inventor: MATSUMOTO, Kazuaki, Tokyo 108-8001 (JP); NAKAHARA, Kentaro, Tokyo 108-8001 (JP); IWASA, Shigeyuki, Tokyo 108-8001 (JP); NAKANO, Kaichiro, Tokyo 108-8001 (JP); UTSUGI, Koji, Kanagawa 252-5298 (JP); ISHIKAWA, Hitoshi, Kanagawa 252-5298 (JP); KANEKO, Shinako, Kanagawa 252-5298 (JP)
(74) Representative: Glawe, Delfs, Moll
(86) International application number: PCT/JP2009/065958
(87) International publication number: WO 2010/030008

(56) References cited:
- EP-A2- 0 696 077
- JP-A- 8 022 839
- JP-A- 8 022 839
- JP-A- 8 111 238
- JP-A- 11 176 470
- JP-A- 60 023 973
- JP-A- 60 023 973
- JP-A- 2000 348 764
- JP-A- 2000 348 764
- JP-A- 2001 160 414
- JP-A- 2001 160 414
- MANDAL B K ET AL: "New low temperature electrolytes with thermal runaway inhibition for lithium-ion rechargeable batteries", JOURNAL OF POWER SOURCES, ELSEVIER SA, CH, vol. 162, no. 1, 8 November 2006 (2006-11-08), pages 690-695, XP025084645, ISSN: 0378-7753, DOI: 10.1016/J.JPOWSOUR.2006.06.053 [retrieved on 2006-11-08]
- BALAKRISHNAN P G ET AL: "Safety mechanisms in lithium-ion batteries", JOURNAL OF POWER SOURCES, ELSEVIER SA, CH, vol. 155, no. 2, 21 April 2006 (2006-04-21), pages 401-414, XP025083879, ISSN: 0378-7753 [retrieved on 2006-04-21]
- AURBACH D ET AL: "Design of electrolyte solutions for Li and Li-ion batteries: a review", ELECTROCHIMICA ACTA, ELSEVIER SCIENCE PUBLISHERS, BARKING, GB, vol. 50, no. 2-3, 30 November 2004 (2004-11-30), pages 246-253, XP004628821, ISSN: 0013-4686
- WANG,X. ET AL.: "High-concentration Trimethyl Phospahte Based Nonflammable Electrolytes with Improved Charge-Discharge Perfromance of a graphite Anode for Lithium-Ion Cells", JOURNAL OF THE ELECTROCHEMICAL SOCIETY, vol. 153, no. 1, 1 January 2006 (2006-01-01), pages A136-A139, XP002676561,
- MORFORD R V ET AL: "A phosphate additive for poly(ethylene oxide)-based gel polymer electrolytes", SOLID STATE IONICS, NORTH HOLLAND PUB. COMPANY. AMSTERDAM; NL, NL, vol. 177, no. 7-8, 15 March 2006 (2006-03-15), pages 721-726, XP025033679, ISSN: 0167-2738, DOI: 10.1016/J.SSI.2006.01.014 [retrieved on 2006-03-15]
- LEROY ET AL: "Influence of the lithium salt nature over the surface film formation on a graphite electrode in Li-ion batteries: An XPS study", APPLIED SURFACE SCIENCE, ELSEVIER, AMSTERDAM, NL, vol. 253, no. 11, 2 March 2007 (2007-03-02), pages 4895-4905, XP005911072, ISSN: 0169-4332, DOI: 10.1016/J.APSUSC.2006.10.071

## Description

### Technical Field

This invention relates a highly safe secondary battery.

### Background Art

Mainstream secondary batteries which are repeatedly chargeable and dischargeable are represented by lithium secondary batteries having a high energy density. A lithium secondary battery having a high energy density is composed of a positive pole, a negative pole, and an electrolyte (electrolyte solution). In general, a lithium-comprising transition-metal oxide is used as a positive pole active material, and a lithium metal, a lithium alloy, or a material which stores and releases lithium ions is used as a negative pole active material.

An organic solvent in which a lithium salt such as lithium borate tetrafluoride (LiBF₄) or lithium phosphate hexafluoride (LiPF₆) is used as the electrolyte. An aprotic organic solvent such as ethylene carbonate or propylene carbonate is used as the organic solvent.

Although LiTFSI salt having excellent characteristics such as high stability to heat, high solubility, and high ionic conductance is also envisageable as the electrolyte, it was impossible to use this salt as the electrolyte for lithium-ion secondary batteries since the LiTFSI salt causes corrosion reaction with 1 an aluminum collector (Non-Patent Document 1).

An aprotic organic solvent such as ethylene carbonate or propylene carbonate is used as the organic solvent. Such organic solvent is generally volatile and flammable. Therefore, if a lithium secondary battery using organic solvent is overcharged or used in an improper manner, a thermal runaway reaction may be caused in the positive pole, possibly resulting in ignition. In order to prevent this, the battery adopts a so-called separator shutdown mechanism which causes a separator to clog before reaching the thermal runaway starting temperature and thereby prevents generation of Joule heat after that. Efforts have also been made to improve the safety of lithium secondary batteries by using lithium nickel oxide (LiNiO₂) or lithium manganate (LiMn₂O₄), having a higher thermal runaway reaction starting temperature than lithium cobaltate (LiCoO₂), as the positive pole. In recent years, studies have been made to improve the safety furthermore, by using ester phosphate known as an organic solvent having a high non-flammable effect, as an electrolyte solution for lithium secondary batteries (Patent Documents 1 and 2).

On the other hand, ester phosphate by itself shows poor resistance to reduction (1.0V Li/Li+), and thus it will not work properly when it is used alone as the electrolyte solution for lithium secondary batteries. Therefore, attempts have been made to solve this problem by mixing ester phosphate with an existing carbonate organic solvent or by using an additive agent.

In order to make the electrolyte solution non-flammable by mixing with the carbonate organic solvent, 20% or more of ester phosphate must be mixed therewith. However, the mixture of 20% or more of ester phosphate extremely reduces the discharge capacity, which makes it difficult to realize non-flammability while maintaining the battery characteristics (Non-Patent Document 2).

Further, attempts have also been reported in which ester phosphate is used in a high concentration while adding a film additive such as VC (vinylene carbonate) or VEC (vinyl etylene carbonate) (Non-Patent Document 3). However, according to this Non-Patent Document, a theoretical capacity cannot be obtained with an additive amount of 10% or less, and thus a mixture of VC, VEC and CH is used in a total amount of 12%. In order to improve the cycle characteristic furthermore, 15% of an additive is added. The additive amount of 10% or more is very large. Not only the non-flammable effect is deteriorated by that much, but also an unexpected secondary reaction may be caused. Although it is reported that a battery composed of a graphite electrode and a Li electrode is capable of providing an equivalent capacity to the theoretical capacity of graphite, it is another matter whether or not a lithium ion battering using a transition-metal oxide such as lithium cobaltate or lithium manganate in place of a Li electrode operates normally. This is because the additive may react with the positive pole, and in fact it is reported that vinylene carbonate, for example, is reactive with an electrically charged positive pole (Patent Document 3). In addition, a battery must be fabricated by taking into consideration not only reactions between an electrolyte solution and a positive pole active material but also reactions between the electrolyte solution and a positive pole collector. In fact, aluminum, which is widely used as a collector, reacts with an electrolyte solution near 4.0 V (Li/Li+). The potential that causes corrosion reaction with aluminum will not change significantly even if a film-forming additive is added (Comparison Examples 8 and 14 to be described later). Further, another problem has been revealed that addition of an additive in an amount as large as 10% will deteriorate the rate characteristic (see Comparison Examples 9, 10, and 12 to be described later).

As described above, there has been no method for allowing a lithium secondary battery to work effectively, using ester phosphate at a high concentration but without adding a film-forming additive. In addition, there has been a desire for further improvement to solve the problem of deterioration in rate characteristic caused by addition of a film additive.

On the other hand, there has been an idea of incorporating a high-concentration electrolyte (Patent Document 4).

However, this Patent Document 4 relates to an invention which has been made by taking into consideration only a phosphate ester derivative obtained by substituting ester phosphate with halogen atoms. Examples disclosed therein also mention only cases in which a phosphate ester derivative is mixed 20% by volume or less. There is no battery reported that is successfully operated with ester phosphate mixed at a high concentration of 20% or more. In examples disclosed in this Patent Document 4, the highest concentration of the electrolyte is 1.0 mol/L, and there is no example in which a higher concentration of lithium salt is mixed.

Summarizing the foregoings, excellent battery characteristics could not be obtained by using an electrolyte solution comprising 20% by volume or more of ester phosphate in order to enhance the safety of the battery. It was not possible either to use a salt having high stability to heat, such as LiTFSI, for the electrolyte.

### Prior Art Documents

### Patent Documents

Patent Document 1: JP H4-18480A
Patent Document 2: JP H8-22839A
Patent Document 3: JP 2005-228721A
Patent Document 4: JP H8-88023

### Non-Patent Documents

Non-Patent Document 1: Larry J. Krause, William Lamanna, John Summerfield, Mark Engle, Gary Korba, Robert Loch, Radoslav Atanasoski, "Corrosion of aluminum at high voltages in non-aqueous electrolytes comprising perfluoroalkylsulfonyl imides; new lithium salts for lithium-ion cells" Journal of Power Sources 68, 1997, p.A320-325
Non-Patent Document 2: Xianming Wang, Eiki Yasuk 1, awa, and Shigeaki Kasuya, "Nonflammable Trimethyl Phosphate Solvent-Containing Electrolytes for Lithium-Ion Batteries "Journal of The Electrochemical Society 148(10), 2001, p.A1058-A1065
Non-Patent Document 3: Xianming Wang, Chisa Yasuda, Hitoshi Naito, Go Sagami, and Koichi Kibe, "High-Concentration Trimethyl Phosphate-Based Nonflammable Electrolytes with Improved Charge-Discharge Performance of a Graphite Anode for Lithium-Ion Cells" Journal of The Electrochemical Society 153(1), 2006, p.A135-A139

Non-aqueous electrolyte solutions comprising phosphoric ester derivatives/phosphates and lithium salts for secondary batteries are disclosed in EP 0696077 A, J. Power Sources 162, 690 (2006), J. Power Sources 155, 401 (2006), Electrochim. Acta 50, 247 (2004) and J. Electrochem. Soc. 153, A135 (2006).

### Disclosure of the Invention

### Problems To Be Solved by the Invention

As described above, the techniques of mixing ester phosphate to an existing carbonate organic solvent for the purpose of making the electrolyte solution non-flammable have a problem of difficulty in using 20% or more of ester phosphate. Therefore, there has been found no completely non-flammable electrolyte solution having favorable rate characteristic and cycle characteristic in lithium secondary batteries using a negative pole made of a carbon material such as graphite.

It was also difficult to use a LiTFSI salt having high stability to heat as the electrolyte. This invention has been made in view of the reasons as described above, and it is an object of the invention to provide a high-safety secondary battery having a non-flammable electrolyte solution.

### Means for Solving the Problems

In order to achieve the object described above, a first aspect of the invention provides a secondary battery according to claim 1.

A second aspect of the invention provides a charge/discharge method using the secondary battery described in the first aspect of the invention.

A third aspect of the invention provides a method of manufacturing a secondary battery according to claim 9.

### Advantageous Effects of the Invention

According to this invention, a safer secondary battery can be provided wherein its electrolyte solution is made non-flammable.

### Brief Description of the Drawings

Fig. 1 is a schematic diagram showing a secondary battery 101;
Fig. 2 is an exploded view of a coin-type secondary battery 201;
Fig. 3 is a diagram showing evaluation results of rate characteristic tests conducted on samples of Examples 6 to 9 and 24, and Comparison Examples 9, 10 and 12;
Fig. 4 is a diagram showing evaluation results of ionic conductance for electrolyte solutions of Examples 1 to 12, and Comparison Examples 1 to 6;
Fig. 5 is a diagram showing LV (Linear Sweep Voltammetry) measurement results for electrolyte solutions of Example 27, and Comparison Examples 6 and 13; and
Fig. 6 is is a diagram showing LV (Linear Sweep Voltammetry) measurement results for electrolyte solutions of Example 12, and Comparison Examples 8 and 14.

### List of Reference Numerals

- 1: Stainless-steel outer packaging
- 2: Insulation gasket
- 3: Negative pole
- 4: Separator
- 5: Positive pole
- 6: Positive pole collector
- 101: Secondary battery
- 102: Positive pole
- 103: Negative pole
- 104: Electrolyte solution
- 201: Coin-type secondary battery

### Best Mode for Carrying Out the Invention

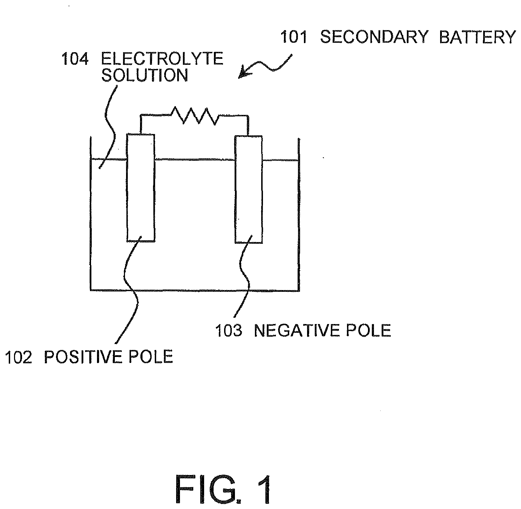

Preferred embodiments of this invention will be described in detail with reference to the drawings. As shownin Fig. 1, a basic configuration of a secondary battery 101 of this invention is composed at least of a positive pole 102, a negative pole 103, and an electrolyte solution 104. The positive pole of the lithium ion secondary battery is formed of an oxide of a material for storing and releasing lithium, whereas the negative pole is formed of a carbon material for storing and releasing lithium. The electrolyte solution comprises a lithium salt at a concentration of 1.5mol/L or more, or comprises a phosphorus compound and a high-concentration lithium salt together.

The term "high-concentration lithium salt" as used in this invention shall means a lithium salt of a concentration of 1.0mol/L or more.

As a result of earnest studies on the configuration described above, the inventors of this invention have found that it is possible to obtain an effectively working battery employing an electrolyte solution made of 100% ester phosphate without adding any additive, by incorporating a high-concentration lithium salt in the electrolyte solution 104.

The inventors have also found that a high discharge capacity can be obtained by mixing with a carbonate electrolyte solution.

It was also proved that the non-flammable effect can be improved further more by incorporating a non-flammable lithium salt at a high concentration.

As a result, it was found that the electrolyte solution can be made non-flammable by incorporating 20% by volume or more of a phosphate ester derivative.

This means that the electrolyte solution 104 comprises a lithium salt of a concentration of 1.5 mol/L or more.

The following description of embodiments of this invention will be made specifically on materials used in a lithium ion secondary battery and a method of fabricating components thereof. However, it should be understood that the invention is not limited to these. In the first place, description will be made of a phosphorus compound as a material used in the lithium ions secondary battery, a carbonate organic solvent, a film-forming additive, an electrolyte solution, a positive pole, a negative pole, a separator, and a shape of the battery.

### <Phosphorus Compound>

Phosphate ester derivatives used in this invention may be represented by compounds expressed by the following formulae 1 and 2.

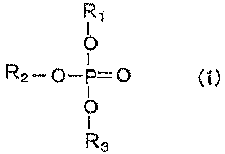

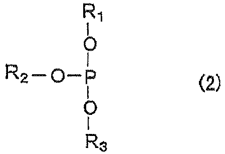

In the formulae 1 and 2, R₁, R₂ and R₃ each indicate an alkyl group having seven or less carbon atoms, or an alkyl halide group, an alkenyl group, a cyano group, a phenyl group, an amino group, a nitro group, an alkoxy group, a cycloalkyl group, or a silyl group, including a cyclic structure in which any or all of R₁, R₂ and R₃ are bonded. Specifically, the phosphate ester derivative may be trimethyl phosphate, triethyl phosphate, tripropyl phosphate, tributyl phosphate, tripentyl phosphate, trioctyl phosphate, triphenyl phosphate, dimethylethyl phosphate, dimethylpropyl phosphate, dimethylbutyl phosphate, dimethylethyl phosphate, dipropylmethyl phosphate, dibutylmethyl phosphate, methylethylpropyl phosphate, methylethylbutyl phosphate, methylpropyllbutyl phosphate, dimethylmethyl phosphate (DMMP), dimethylethyl phosphate, or dimethylethyl phosphate. In addition, the phosphate ester derivative also may be methylethylene phosphate, ethylethylene phosphate (EEP), or ethybutylene phosphate, having a cyclic structure, or tris(trifluoromethyl) phosphate, tris(pentafluoroethyl) phosphate, tris(2,2,2-trifluoroethyl) phosphate, tris (2,2,3,3-tetrafluoropropyl) phosphate, tris(3,3,3-trifluoropropyl) phosphate, or tris(2,2,3,3,3-pentafluoropropyl) phosphate, substituted with an alkyl halide group. Further, the phosphate ester derivative also may be trimethyl phosphite, triethyl phosphite, tributyl phosphate, triphenyl phosphite, dimethylethyl phosphite, dimethylpropyl phosphite, dimethylbutyl phosphite, dimethylethyl phosphite, dipropylmethyl phosphite, dibutylmethyl phosphite, methylethylpropyl phosphite, methylethylbutyl phosphite, methylpropylbutyl phosphite, or dimethyl-trimethyl-silyl phosphite. Ttrimethyl phosphate, triethyl phosphate, trioctyl phosphate, and triphenyl phosphate are particularly preferred because of their high safety.

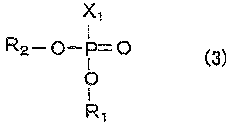

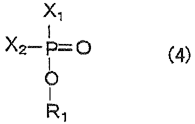

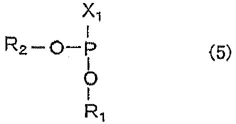

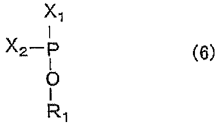

The phosphate ester derivative may be a compound represented by any of the general formulae 3, 4, 5, and 6. In the formulae 3, 4, 5 and 6, R₁ and R₂ may be the same or different, and each indicate an alkyl group having seven or less carbon atoms, or an alkyl halide group, an alkenyl group, a cyano group, a phenyl group, an amino group, a nitro group, an alkoxy group, or a cycloalkyl group, including a cyclic structure formed by bonding R₁ and R₂. In these formulae, X₁, and X₂ are halogen atoms which may be the same or different.

Specific examples of the phosphate ester derivative include: methyl(trifluoroethyl) fluorophosphate, methyl(trifluoroethyl) fluorophosphate, propyl(trifluoroethyl) fluorophosphates, aryl(trifluoroethyl) fluorophosphate, butyl(trifluoroethyl) fluorophosphate, phenyl(trifluoroethyl) fluorophosphate, bis(trifluoroethyl) fluorophosphate, methyl(tetrafluoropropyl) fluorophosphate, ethyl(tetrafluoropropyl) fluorophosphate, tetrafluoropropyl(trifluoroethyl) fluorophosphate, phenyl(tetrafluoropropyl) fluorophosphate, bis(tetrafluoropropyl) fluorophosphate, metyl(fluorophenyl) fluorophosphate, ethyl(fluorophenyl) fluorophosphate, fluorophenyl(trifluoroethyl) fluorophosphate, difluorophenyl fluorophosphate, fluorophenyl(tetrafluoropropyl) fluorophosphate, methyl(difuluorophenyl) fluorophosphate, ethyl (difuluorophenyl) fluorophosphate, difluorophenyl (trifluoroethyl) fluorophosphate, bis (difluorophenyl) fluorophosphate, difluorophenyl(tetrafluoropropyl) fluorophosphate, fluoroethylene fluorophosphate, difluoroethylene fluorophosphate, fluoropropylene fluorophosphate, difluoropropylene fluorophosphate, trifluoropropylene fluorophosphate, fluroethyl difluorophosphate, difluoroethyl difluorophosphate, fluoropropyl difluorophosphate, difluoropropyl difluorophosphate, trifluoropropyl difluorophosphate, tetrafluoropropyl difluorophosphate, pentafluoropropyl difluorophosphate, fluoroisopropyl difluorophosphate, difluoroisopropyl difluorophosphate, trifluoroisopropyl difluorophosphate, tetrafluoroisopropyl difluorophosphate, pentafluoroisopropyl difluorophosphate, hexafluoroisopropyl difluorophosphate, heptafluorobutyl difluorophosphate, hexafluorobutyl difluorophosphate, octacluorobutyl difluorophosphate, perfluoro-t-butyl difluorophosphate, hexafluoroisobutyl difluorophosphate, fluorophenyl difluorophosphate, difluorophenyl difluorophosphate, 2-fluoro-4-methylphenyl difluorophosphate, trifluorophenyl difluorophosphate, tetrafluorophenyl difluorophosphate, pentafluorophenyl difluorophosphate, 2-fluoromethylphenyl difluorophosphate, 4- fluoromethylphenyl difluorophosphate, 2-difluoromethylphenyl difluorophosphate, 3-difluoromethylphenyl difluorophosphate, 4-difluoromethylphenyl difluorophosphate, 2-trifluoromethylphenyl difluorophosphate, 3-trifluoromethylphenyl difluorophosphate, 4-trifluoromethylphenyl difluorophosphate, and 2-fluoro-4-methoxyphenyl difluorophosphate. Additionally, examples of the phosphate ester derivative also include phosphate esters such as trifluoromethyl phosphite, and trifluoroethyl phosphite. Among these, fluoroethylene fluorophosphate, bis(trifluoroethyl) fluorophosphate, fluoroethyl difluorophosphate, trifluoroethyl difluorophosphate, propyl difluorophosphate, and phenyl difluorophosphate are preferable, and fluoroethyl difluorophosphate, tetrafluoropropyl difluorophosphate, and fluorophenyl difluorophosphate are more preferable in terms of their low viscosity and fire retardancy.

A certain aspect of this invention is aimed at mixing these phosphate ester derivatives with an electrolyte solution to make the electrolyte solution non-flammable. A better non-flammable effect is obtained as the concentration of the phosphate ester derivatives is higher. These phosphate ester derivatives may be used either alone or in combination of two or more.

### <Carbonate Organic Solvent>

The electrolyte solution used in this invention is preferably mixed with any of the following carbonate organic solvents simultaneously. The carbonate organic solvents include ethylene carbonate (EC), propylene carbonate (PC), butylene carbonate, dimethyl carbonate (DMC), ethylmethyl carbonate (EMC), fluoroethylene carbonate (FEC), cloroethylene carbonate, diethyl carbonate (DEC), dimethoxyethane (DME), diethoxyethane (DEE), diethyl ether, phenylmethyl ether, tetrahydrofuran (THF), tetrahydropyran (THP), 1,4-dioxane (DIOX), 1,3-dioxolane (DOL), acetonitrile, propionitrile, γ-butyrolactone, and γ-valerolactone. In view of safety, ethylene carbonate, diethylcarbonate, propylene carbonate, dimethyl carbonate, etylmethyl carbonate, γ-butyrolactone, and γ-valerolactone are particularly preferable, but the carbonate organic solvent usable in the invention is not limited to these. The concentration of these carbonate organic solvents is preferably 5% by volume or higher, and more preferably 10% by volume or higher. However, the electrolyte solution will become flammable if the mixing percentage of the carbonate organic solvent is too high. Therefore, it is preferably lower than 75% by volume, and more preferably lower than 60% by volume. The carbonate organic solvents may be used alone or in combination of two or more.

### <Film-Forming Additive>

The term "film additive" as used in this invention refers to an agent for electrochemically coating the surface of a negative pole. Specific examples thereof include vinylene carbonate (VC), vinyl etylene carbonate (VEC), ethylene sulfite (ES), propane sultone (PS), butane sultone (BS), dioxathiolane-2,2-dioxide (DD), sulfolene, 3-methylsulfolene, sulfolane (SL), succinic anhydride (SUCAH), propionic anhydride, acetic anhydride, maleic anhydride, diaryl carbonate (DAC), and diphenyl disulfide (DPS), but the film additive usable in the invention is not limited to these. If the additive amount is increased too much, it will adversely affect the battery characteristics. Therefore, the additive amount is desirably less than 10% by mass. PS and BS having a cyclic structure, DD, and succinic anhydride are particularly preferable. Further, if an additive has a double bond between carbon atoms in molecules, a greater amount of the additive is required to prevent decomposition of ester phosphate. Therefore, it is desirable to select an additive that has no double bond between carbon atoms in molecules. Accordingly, PS and DD are particularly desirable as the additive, and it is more desirable that SL or the like is mixed therein. If LiPF6 is used as a lithium salt, it is desirable to use PS as the additive.

### <Electrolyte Solution>

The electrolyte solution functions to transport a charged carrier between the negative pole and the positive pole. For example, an organic solvent having a lithium salt dissolved therein can be used as the electrolyte solution. The lithium salt may be, for example, LiPF₆, LiBF₄, LiAsF₆, LiClO₄, Li₂B₁₀Cl₁₀, Li₂B₁₂Cl₁₂, LiB(C₂O₄)₂, LiCF₃SO₃, LiCl, LiBr, and LiI. Also usable are LiBF₃(CF₃), LiBF₃(C₂F₅), LiBF₃(C₃F₇), LiBF₂(CF₃)₂, and LiBF₂(CF₃)(C₂F₅) obtained by substituting at least one fluorine atom in LiBF₄ with an alkyl fluoride group, and LiPF₅(CF₃), LiPF₅(C₂F₅), LiPF₅(C₃F₇), LiPF₄(CF₃)₂, LiPF₄(CF₃)(C₂F₅), and LiPF₃(CF₃)₃ obtained by substituting at least one fluorine atom in LiPF₆ with an alkyl fluoride group.

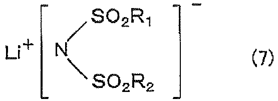

In addition, the lithium salt also may be a salt consisting of a compound having a chemical structure represented by Formula 7 above. R₁, and R₂ in Formula 7 are selected from a group consisting of halogens and alkyl fluorides. R₁ and R₂ may be different from each other and may be cyclic. Specific examples include LiN(FSO₂)₂, LiN(CF₃SO₂)₂, LiN(C₂F₅SO₂)₂, LiN(CF₃SO₂)(C₄F₉SO₂), and CTFSI-Li which is a five-membered cyclic compound.

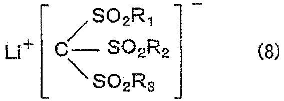

In addition, the lithium salt may be a salt consisting of a compound having a chemical structure represented by Chemical Formula 8. R₁, R₂, and R₃ in Formula 8 are each selected from a group consisting of halogens and alkyl fluorides. R₁, R₂, and R₃ may be the same or different. Specific examples of the lithium salt include LiC(CF₃SO₂)₃ and LiC(C₂F₅SO₂)₃. These lithium salts may be used alone or in combination of two or more. Among these salts, LiN(CF₃SO₂)₂ and LiN(C₂F₅SO₂) having high stability to heat, and LiN(FSO₂)₂ and LiPF₆ having high ionic conductance are particularly preferable.

### <Positive Pole>

The material of the oxide positive pole according to this invention may be LiMn₂O₄, LiCoO₂, LiNiO₂, LiFePO₄, or LixV₂O₅ (0<x<2), or an oxide of a lithium-comprising transition-metal obtained by partially susbstituting a transition metal of such compound with another metal. The positive pole according to this invention can be formed on a positive pole collector, and the positive pole collector may be provided by one formed on foil or a metal plate made of nickel, aluminum, copper, gold, silver, an aluminum alloy, stainless steel, or carbon.

### <Negative Pole>

Materials storing and releasing lithium and usable in this invention include, but need not be limited to, silicon, tin, aluminum, silver, indium, antimony, bismuth and so on, while any other material may be used without problem as long as it is capable of storing and releasing lithium. Materials for the carbon negative poles include carbon materials such as pyrolytic carbons, cokes (pitch cokes, needle cokes, petroleum cokes, etc.), graphites, glassy carbons, organic polymer compound sintered bodies (carbonated materials obtained by sintering phenol resins or furan resins at an appropriate temperature), carbon fibers, activated carbons, and graphites. A binding agent may be used for enhancing the bond between the components of the negative pole. Such binding agent may be, for example, polytetrafluoroethylene, polyvinylidene fluoride, vinylidene fluoride-hexafluoropropylene copolymer, vinylidene fluoride-tetrafluoroethylene copolymer, stylene-butadiene rubber, polypropylene, polyethylene, polyimide, partially carboxylated cellulose, various polyurethanes, polyacrylonitrile, or the like. The negative pole according to the invention can be formed on a negative pole collector, and the negative pole collector may be one formed on foil or a metal plate made of nickel, aluminum, copper, gold, silver, an aluminum alloy, stainless steel, or carbon.

The negative pole formed of a carbon material used in this invention may be one previously coated with a film. This film is commonly referred to as SEI (Solid Electrolyte Interphase), which is produced on a negative pole in the process in which a lithium ion battery is charged or discharged, and which is impermeable to an electrolyte solution but permeable to ions. While the film can be fabricated by various ways such as vapor deposition and chemical decoration, it is preferably fabricated electrochemically. According to this fabrication method, specifically, a battery is composed of an electrode of a carbon material and another electrode of a material discharging lithium ions as the counter electrode across a separator, and a film is generated on the negative pole by repeatedly charging and discharging at least once. The electrolyte solution usable in this process may be a carbonate electrolyte solution having a lithium salt dissolved therein. After the charge and discharge, the electrode made of a carbon material is taken out. This electrode can be used as the negative pole according to the invention. Alternatively, the process may be terminated by the discharge so that the electrode is used in which lithium ions are inserted in the layer of a carbon material.

### <Separator>

The lithium ion secondary battery according to this invention may be provided with a separator formed of a porous film, cellulose film, or nonwoven fabric of polyethylene, polypropylene, or the like in order to prevent the contact between the positive pole and the negative pole. The separator may be used alone or in combination of two or more.

### <Battery Shape>

The shape of the secondary battery according to this invention is not limited particularly, and any conventionally known shapes can be used. The shape of the battery may be, for example, a circular cylindrical shape, a rectangular cylindrical shape, a coin-like shape, or a sheet-like shape. The battery of such a shape is obtained by fabricating the aforementioned positive pole, the negative pole, the electrolyte, and the separator by sealing an electrode layered body or wound body in a metal case or a resin case, or by a laminated film consisting of a synthetic resin film and a metal foil such as aluminum foil. However, this invention is not limited to these.

Next, a description will be made of a method of fabricating the electrolyte solution, the positive pole, the negative pole and the coin-type secondary battery according to this invention, using the materials mentioned above.

### <Fabrication Method of Electrolyte Solution>

The electrolyte solution was fabricated within a dry room by dissolving a lithium salt of (tetrafluorosulfonyl) imide (hereafter, abbreviated as LiTFSI) having a molecular weight of 287.1 in a phosphorus compound at a certain concentration.

### <Positive Pole Fabrication Method>

The active pole active material was prepared by mixing VGCF (made by Showa Denko K.K.) as a conductive agent in a lithium-manganese composite oxide (LiMn₂O₄) materia, and the mixture was dispersed in N-methylpyrolidone (NMP) to produce slurry. The slurry was then applied on an aluminum foil serving as a positive pole collector and dried. After that, a positive pole having a diameter of 12 mmϕ was fabricated.

### <Negative Pole Fabrication Method>

The negative pole active material was provided by dispersing a graphite material in N-methylpyrolidone (NMP) to produce slurry. The slurry is then applied on a copper foil functioning as the negative pole collector and dried. After that, an electrode having a diameter of 12 mmϕ was fabricated.

The negative pole used in this invention may also be an electrode characterized by having a film previously formed on the surface of a negative pole (hereafter, referred to as the negative pole with SEI). A description will be made of such a case. This electrode was fabricated by a method in which a coin cell consisting of a lithium metal and an electrolyte solution was fabricated as a counter electrode to this electrode across a separator, and a film was formed electrochemically on the surface of the negative pole by repeating 10 cycles of discharge and charge in this order at a rate of 1/10C.

The electrolyte solution used in this process was prepared by dissolving lithium hexafluorophosphate (hereafter, abbreviated as LiPF₆) with a molecular weight of 151.9 in a carbonate organic solvent in such an amount as to give a concentration 1 mol/L (1M). This carbonate organic solvent used here was a liquid mixture of ethylene carbonate (EC) and diethyl carbonate (DEC) mixed in a volume ratio of 30:70 (hereafter, abbreviated as EC/DEC or EC/DEC (3:7)). The cut-off potential in this process was set to 0 V during discharge and set to 1.5 V during charge. After the 10th charge, the coin cell was disassembled to take out the electrode of graphite (negative pole with SEI), which was used as the negative pole according to this invention.

### <Coin-Type Secondary Battery Fabrication Method>

A positive pole 5 obtained by the method described above was placed on a positive pole collector 6 made of stainless steel and serving also as a coin cell receptacle, and a negative pole 3 of graphite was overlaid thereon with a separator 4 made of a porous polyethylene film interposed therebetween, whereby an electrode layered body was obtained. The electrolyte solution obtained by the method described above was injected into the electrode layered body thus obtained to vacuum-impregnate the same. After the gaps between the electrodes and the separator fully impregnated were filled with the electrolyte solution, an insulation gasket 2 is placed on top of the negative pole collector serving also as the coin cell receptacle, and the outside of the whole body was covered with a stainless-steel outer packaging 1 by means of a dedicated caulking device, whereby a coin-type secondary battery was produced.

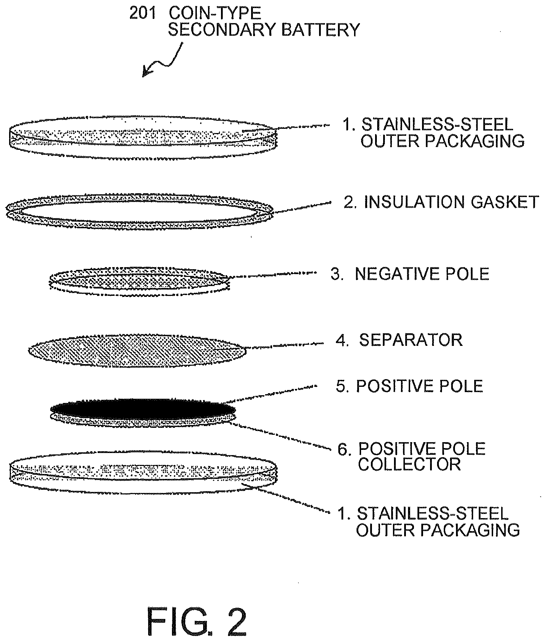

Fig. 2 shows an exploded view of the coin-type secondary battery thus produced.

### Examples

This invention will be described more specifically based on Examples. Lithium ions secondary batteries were produced as Examples 1 to 26, varying the phosphorus compound, the carbonate organic solvent, their composition ratio, the additive agent, and the lithium salt as described in the embodiments. For the purpose of comparison, Comparison Examples 1 to 8 were produced, and flammability tests and evaluations and discharge capacity measurements were conducted in the same manner on the Examples and Comparison Examples.

Each of the flammability tests and evaluations was conducted as follows. A strip of glass fiber filter paper having a width of 3 mm, a length of 30 mm, and a thickness of 0.7 mm was soaked with 50 µl of an electrolyte solution. Holding one end of the filter paper strip with a pincette, the other end of the strip was brought close to a gas burner flame having a height of 2 cm. After kept close to the flame for two seconds, the filter paper strip was moved away from the frame and it was checked visually whether the filter paper strip had caught a flame. If no flame was observed, the filter paper strip was kept close to the gas burner flame for another three seconds, and then was moved away from the flame to check whether or not it had caught a flame. If no flame was observed in neither of the two tests, the electrolyte solution was determined to be "non-flammable", whereas if a flame was observed in either one of the two tests, it was determined to be "flammable".

The measurements of discharge capacity were performed using coin-type lithium secondary batteries produced by the method described above. The discharge capacity of each of the coin-type lithium secondary batteries was evaluated by procedures as follows. Initially, the battery was constant-current charged at a current of 0.025 C to an upper limit voltage of 4.2 V and was discharged likewise at a current of 0.025 C to cut-off 3.0 V. A discharge capacity observed in this process was taken as the first discharge capacity. It should be noted that the term "discharge capacity" as used in this Example means a value per weight of the positive pole active material.

The measurement of rate characteristic was conducted on the same battery after the measurement of discharge capacity, in the procedures described below. Initially, the battery was constant-current charged at a current of 0.2 C to an upper limit voltage of 4.2 V, and then discharged to a lower limit voltage of 3.0 V sequentially at constant currents of 1.0 C, 0.5 C, 0.2 C, and 0.1 C in this order. The discharge capacity obtained at each rate was defined by the sum of the discharge capacity obtained at that rate and the discharge capacity obtained by then.

The ionic conductance was evaluated using a portable conductivity meter made by Mettler Toledo under the temperature condition of 20°C.

A Linear Sweep Voltammetry (hereafter, abbreviated as LV) measurement was conducted by using a three-pole cell consisting of an evaluation electrolyte solution, a working electrode of aluminum, a reference electrode of Li, and a counter electrode of Li, and sweeping the potential between 1.5 V and 5 V (vs Li).

### <Example 1> (outside the scope of the claims)

LiTFSI was dissolved in trimethyl phosphate (hereafter, abbreviated as TMP) that is a phosphate ester derivative in such an amount as to give a concentration of 2.5 mol/L (2.5 M), and this was used as an electrolyte solution for the combustion test. A discharge capacity test was conducted by using a positive pole made of a LiMn₂O₄ active material and a negative pole made of graphite. The test results are shown in Table 1.

### <Example 2>

LiTFSI was dissolved in a solution in which TMP and EC/DEC (3:7) as a carbonate organic solvent were mixed in a volume ratio of 60:40 (TMP/EC/DEC=60/12/28), in such an amount as to give a concentration of 2.0 mol/L (2.0 M), and this was used as an electrolyte solution for the combustion test. A discharge capacity test was conducted by using the same positive pole and negative pole as those of Example 1, except for the electrolyte solution. The test results are shown in Table 1.

### <Example 3>

LiTFSI was dissolved in a solution in which TMP and EC/DEC (3:7) as s a carbonate organic solvent were mixed in a volume ratio of 60:40 (TMP/EC/DEC=60/12/28), in such an amount as to give a concentration of 2.5 mol/L (2.5 M), and this was used as an electrolyte solution for the combustion test. A discharge capacity test was conducted by using the same positive pole and negative pole as those of Example 1, except for the electrolyte solution. The test results are shown in Table 1.

### <Example 4>

LiTFSI was dissolved in a solution in which TMP and EC/DEC (3:7) as a carbonate organic solvent were mixed in a volume ratio of 60:40 (TMP/EC/DEC=60/12/28), in such an amount as to give a concentration of 3.0 mol/L (3.0 M), and this was used as an electrolyte solution for the combustion test. A discharge capacity test was conducted by using the same positive pole and negative pole as those of Example 1, except for the electrolyte solution. The test results are shown in Table 1.

### <Example 5>

LiTFSI was dissolved in a solution in which TMP and EC/DEC (3:7) as a carbonate organic solvent were mixed in a volume ratio of 60:40 (TMP/EC/DEC=60/12/28), in such an amount as to give a concentration of 3.5 mol/L (3.5 M), and this was used as an electrolyte solution for the combustion test. A discharge capacity test was conducted by using the same positive pole and negative pole as those of Example 1, except for the electrolyte solution. The test results are shown in Table 1.

### <Example 6>

LiTFSI was dissolved in a solution in which TMP and EC/DEC (3:7) as a carbonate organic solvent were mixed in a volume ratio of 40:60 (TMP/EC/DEC=40/18/42), in such an amount as to give a concentration of 2.0 mol/L (2.0 M), and this was used as an electrolyte solution for the combustion test. A discharge capacity test was conducted by using the same positive pole and negative pole as those of Example 1, except for the electrolyte solution. The test results are shown in Table 1.

### <Example 7>

LiTFSI was dissolved in a solution in which TMP and EC/DEC (3:7) as a carbonate organic solvent were mixed in a volume ratio of 40:60 (TMP/EC/DEC=40/18/42), in such an amount as to give a concentration of 2.5 mol/L (2.5 M), and this was used as an electrolyte solution for the combustion test. A discharge capacity test was conducted by using the same positive pole and negative pole as those of Example 1, except for the electrolyte solution. The test results are shown in Table 1.

### <Example 8>

LiTFSI was dissolved in a solution in which TMP and EC/DEC (3:7) as a carbonate organic solvent were mixed in a volume ratio of 40:60 (TMP/EC/DEC=40/18/42), in such an amount as to give a concentration of 3.0 mol/L (3.0 M), and this was used as an electrolyte solution for the combustion test. A discharge capacity test was conducted by using the same positive pole and negative pole as those of Example 1, except for the electrolyte solution. The test results are shown in Table 1.

### <Example 9>

LiTFSI was dissolved in a solution in which TMP and EC/DEC (3:7) as a carbonate organic solvent were mixed in a volume ratio of 40:60 (TMP/EC/DEC=40/18/42), in such an amount as to give a concentration of 3.5 mol/L (3.5 M), and this was used as an electrolyte solution for the combustion test. A discharge capacity test was conducted by using the same positive pole and negative pole as those of Example 1, except for the electrolyte solution. The test results are shown in Table 1.

### <Example 10>

LiTFSI was dissolved in a solution in which diethyl fluorophosphate (hereafter, abbreviated as FDEP) as a phosphate ester derivative and EC/DEC (3:7) as a carbonate organic solvent were mixed in a volume ratio of 40:60 (FDEP/EC/DEC=40/18/42), in such an amount to give a concentration of 3.0 mol/L (3.0 M), and this was used as an electrolyte solution for the combustion test. A discharge capacity test was conducted by using the same positive pole and negative pole as those of Example 1, except for the electrolyte solution. The test results are shown in Table 1.

### <Example 11>

Lithium-bis-penta-fluoroethylsulfonylimide (hereafter, abbreviated as LiBETI) of a molecular weight of 387.1 was dissolved in a solution in which TMP and EC/DEC (3:7) as a carbonate organic solvent were mixed in a volume ratio of 40:60 (TMP/EC/DEC=40/18/42), in such an amount as to give a concentration of 2.5 mol/L (2.5 M), and this was used as an electrolyte solution for the combustion test. A discharge capacity test was conducted by using the same positive pole and negative pole as those of Example 1, except for the electrolyte solution. The test results are shown in Table 1.

### <Example 12>

Lithium hexafluorophosphate (hereafter, abbreviated as LiPF₆) of a molecular weight of 151.9 was dissolved in a solution in which TMP and EC/DEC (3:7) as a carbonate organic solvent were mixed in a volume ratio of 40:60 (TMP/EC/DEC=40/18/42), in such an amount as to give a concentration of 2.5 mol/L (2.5 M), and this was used as an electrolyte solution for the combustion test. A discharge capacity test was conducted by using the same positive pole and negative pole as those of Example 1, except for the electrolyte solution. The test results are shown in Table 1.

### <Example 13>

LiTFSI was dissolved in a solution in which TMP and EC/DEC (3:7) as a carbonate organic solvent were mixed in a volume ratio of 30:70 (TMP/EC/DEC=30/21/49), in such an amount as to give a concentration of 1.8 mol/L (1.8 M), and this was used as an electrolyte solution for the combustion test. A discharge capacity test was conducted by using the same positive pole and negative pole as those of Example 1, except for the electrolyte solution. The test results are shown in Table 1.

### <Example 14>

LiTFSI was dissolved in a solution in which TMP and EC/DEC (3:7) as a carbonate organic solvent were mixed in a volume ratio of 25:75 (TMP/EC/DEC=25/23/52), in such an amount as to give a concentration of 1.5 mol/L (1.5 M), and this was used as an electrolyte solution for the combustion test. A discharge capacity test was conducted by using the same positive pole and negative pole as those of Example 1, except for the electrolyte solution. The test results are shown in Table 1.

### <Example 15>

LiTFSI was dissolved in a solution in which TMP and EC/DEC (3:7) as a carbonate organic solvent were mixed in a volume ratio of 20:80 (TMP/EC/DEC=20/24/56), in such an amount as to give a concentration of 1.5 mol/L (1.5 M), and this was used as an electrolyte solution for the combustion test. A discharge capacity test was conducted by using the same positive pole and negative pole as those of Example 1, except for the electrolyte solution. The test results are shown in Table 1.

### <Example 16>

LiTFSI and LiPF₆ (60:40) were dissolved in a solution in which TMP and EC/DEC (3:7) as a carbonate organic solvent were mixed in a volume ratio of 40:60 (TMP/EC/DEC=40/18/42), in such a total amount as to give a concentration of 2.5 mol/L (2.5 M), and this was used as an electrolyte solution for the combustion test. A discharge capacity test was conducted by using the same positive pole and negative pole as those of Example 1, except for the electrolyte solution. The test results are shown in Table 1.

### <Example 17>

LiTFSI and LiPF₆ (25:75) were dissolved in a solution in which TMP and EC/DEC (3:7) as a carbonate organic solvent were mixed in a volume ratio of 40:60 (TMP/EC/DEC=40/18/42), in such a total amount as to give a concentration of 2.0 mol/L (2.0 M), and this was used as an electrolyte solution for the combustion test. A discharge capacity test was conducted by using the same positive pole and negative pole as those of Example 1, except for the electrolyte solution. The test results are shown in Table 1.

### <Example 18>

LiTFSI was dissolved in a solution in which TMP and EC/DEC (3:7) as a carbonate organic solvent were mixed in a volume ratio of 40:60 (TMP/EC/DEC=40/18/42), in such an amount as to give a concentration of 2.0 mol/L (2.0 M), and this was used as an electrolyte solution for the combustion test. A discharge capacity test was conducted using a positive pole that is the same as that of Example 1, whereas as for a negative pole, a negative pole with SEI was used having a film electrochemically preformed on the surface thereof. The test results are shown in Table 1.

### <Example 19>

LiTFSI was dissolved in a solution in which TMP and EC/DEC (3:7) as a carbonate organic solvent were mixed in a volume ratio of 40:60 (TMP/EC/DEC=40/18/42), in such an amount as to give a concentration of 2.5 mol/L (2.5 M), and this was used as an electrolyte solution for the combustion test. A discharge capacity test was conducted using a positive pole that is the same as that of Example 1, whereas as for a negative pole, a negative pole with SEI was used having a film electrochemically preformed on the surface thereof. The test results are shown in Table 1.

### <Example 20>

LiTFSI was dissolved in a solution in which TMP and γ-butyrolactone (hereafter, abbreviated as yBL) were mixed in a volume ratio of 40:60 (TMP/γBL=40/60), in such an amount as to give a concentration of 2.5 mol/L (2.5 M), and this was used as an electrolyte solution for the combustion test. A discharge capacity test was conducted by using the same positive pole and negative pole as those of Example 1, except for the electrolyte solution. The test results are shown in Table 1.

### <Example 21 >

LiPF₆ was dissolved in a solution in which TMP and dimethoxyethane (hereafter, abbreviated as DME) were mixed in a volume ratio of 40:60 (TMP/DME=40/60), in such an amount as to give a concentration of 2.5 mol/L (2.5 M), and this was used as an electrolyte solution for the combustion test. A discharge capacity test was conducted by using the same positive pole and negative pole as those of Example 1, except for the electrolyte solution. The test results are shown in Table 1.

### <Example 22>

LiPF₆ was dissolved in a solution in which TMP and EC/DEC (3:7) as a carbonate organic solvent were mixed in a volume ratio of 40:60 (TMP/EC/DEC=40/18/42), in a such an amount as to give a concentration of 2.0 mol/L (2.0 M), and then 3 % by weight of dioxathiolane-2,2-dioxide (hereafter, abbreviated as DD) was dissolved therein, and this was used as an electrolyte solution for the combustion test. A discharge capacity test was conducted by using the same positive pole and negative pole as those of Example 1, except for the electrolyte solution. The test results are shown in Table 1.

### <Example 23>

LiPF₆ was dissolved in a solution in which TMP and EC/DEC (3:7) as a carbonate organic solvent were mixed in a volume ratio of 40:60 (TMP/EC/DEC=40/18/42), in a such an amount as to give a concentration of 2.0 mol/L (2.0 M), and then 1% by weight of succinic anhydride was dissolved therein, and this was used as an electrolyte solution for the combustion test. A discharge capacity test was conducted by using the same positive pole and negative pole as those of Example 1, except for the electrolyte solution. The test results are shown in Table 1.

### <Example 24>

LiPF₆ was dissolved in a solution in which TMP and EC/DEC (3:7) as a carbonate organic solvent were mixed in a volume ratio of 40:60 (TMP/EC/DEC=40/18/42), in a such an amount as to give a concentration of 2.0 mol/L (2.0 M), and then 3% by weight of 1,3-propane sultone (hereafter, abbreviated as PS), and this was used as an electrolyte solution for the combustion test. A discharge capacity test was conducted by using the same positive pole and negative pole as those of Example 1, except for the electrolyte solution. The test results are shown in Table 1.

### <Example 25>

LiPF₆ was dissolved in a solution in which TMP and EC/DEC (3:7) as a carbonate organic solvent were mixed in a volume ratio of 40:60 (TMP/EC/DEC=40/18/42), in a such an amount as to give a concentration of 2.0 mol/L (2.0 M), and then 3% by weight of 1,3-propane sultone (hereafter, abbreviated as PS) and 2 weight% sulfolane (hereafter, abbreviated as SL) were dissolved therein, and this was used as an electrolyte solution for the combustion test. A discharge capacity test was conducted by using the same positive pole and negative pole as those of Example 1, except for the electrolyte solution. The test results are shown in Table 1.

### <Example 26> (outside the scope of the claims)

LiTFSI was dissolved in EC/DEC (3:7) as a carbonate organic solvent, in such an amount as to give a concentration of 1.5 mol/L (1.5 M), and this was used as an electrolyte solution for the combustion test. A discharge capacity test was conducted by using the same positive pole and negative pole as those of Example 1, except for the electrolyte solution. The test results are shown in Table 1.

### <Example 27> (outside the scope of the claims)

LiTFSI was dissolved in EC/DEC (3:7) as a carbonate organic solvent, in such an amount as to give a concentration of 2.0 mol/L (2.0 M), and this was used as an electrolyte solution for the combustion test. A discharge capacity test was conducted by using the same positive pole and negative pole as those of Example 1, except for the electrolyte solution. The test results are shown in Table 1.

### <Example 28>

LiPF₆ was dissolved in a solution in which tris(trifluoromethyl) phosphate (hereafter, abbreviated as TfMP) obtained by substituting TMP with an alkyl halide group and EC/DEC (3:7) as a carbonate organic solvent were mixed in a volume ratio of 40:60 (TfMP/EC/DEC=40/18/42), in such an amount as to give a concentration of 2.5 mol/L (2.5 M), and this was used as an electrolyte solution for the combustion test. A discharge capacity test was conducted by using the same positive pole and negative pole as those of Example 1, except for the electrolyte solution. The test results are shown in Table 1.

### <Example 29>

LiPF₆ was dissolved in a solution in which TfMP and EC/DEC (3:7) as a carbonate organic solvent were mixed in a volume ratio of 40:60 (TfMP/EC/DEC=40/18/42), in such an amount as to give a concentration of 2.0 mol/L (2.0 M), and then 3% by weight of PS was dissolved therein, and this was used as an electrolyte solution for the combustion test. A discharge capacity test was conducted by using the same positive pole and negative pole as those of Example 1, except for the electrolyte solution. The test results are shown in Table 1.

### <Comparison Example 1>

LiTFSI was dissolved in TMP in such an amount as to give a concentration of 1.0 mol/L (1.0 M), and this was used as an electrolyte solution for the combustion test. A discharge capacity test was conducted by using the same positive pole and negative pole as those of Example 1, except for the electrolyte solution. The test results are shown in Table 1.

### <Comparison Example 2>

LiBETI was dissolved in TMP in such an amount as to give a concentration of 1.0 mol/L (1.0 M), 2% by weight of VC was added thereto, and this was used as an electrolyte solution for the combustion test. A discharge capacity test was conducted by using the same positive pole and negative pole as those of Example 1, except for the electrolyte solution. The test results are shown in Table 1.

### <Comparison Example 3>

LiTFSI was dissolved in a solution in which TMP and EC/DEC (3:7) as a carbonate organic solvent were mixed in a volume ratio of 15:85 (TMP/EC/DEC=15/25/60), in such an amount as to give a concentration of 1.0 mol/L (1.0 M), and this was used as an electrolyte solution for the combustion test. A discharge capacity test was conducted by using the same positive pole and negative pole as those of Example 1, except for the electrolyte solution. The test results are shown in Table 1.

### <Comparison Example 4>

LiPF₆ was dissolved in a solution in which TMP and EC/DEC (3:7) as a carbonate organic solvent were mixed in a volume ratio of 15:85 (TMP/EC/DEC=15/25/60), in such an amount as to give a concentration of 1.0 mol/L (1.0 M), and this was used as an electrolyte solution for the combustion test. A discharge capacity test was conducted by using the same positive pole and negative pole as those of Example 1, except for the electrolyte solution. The test results are shown in Table 1.

### <Comparison Example 5>

LiPF₆ was dissolved in a solution in which TMP and EC/DEC (3:7) as a carbonate organic solvent were mixed in a volume ratio of 20:80 (TMP/EC/DEC=20/24/56), in such an amount as to give a concentration of 1.0 mol/L (1.0 M), and this was used as an electrolyte solution for the combustion test. A discharge capacity test was conducted by using the same positive pole and negative pole as those of Example 1, except for the electrolyte solution. The test results are shown in Table 1.

### <Comparison Example 6>

LiTFSI was dissolved in a solution in which TMP and EC/DEC (3:7) as a carbonate organic solvent were mixed in a volume ratio of 40:60 (TMP/EC/DEC=40/18/42), in such an amount as to give a concentration of 1.0 mol/L (1.0 M), and this was used as an electrolyte solution for the combustion test. A discharge capacity test was conducted by using the same positive pole and negative pole as those of Example 1, except for the electrolyte solution. The test results are shown in Table 1.

### <Comparison Example 7>

LiPF₆ was dissolved in a solution in which TMP and EC/DEC (3:7) as a carbonate organic solvent were mixed in a volume ratio of 40:60 (TMP/EC/DEC=40/18/42), in such an amount as to give a concentration of 1.0 mol/L (1.0 M), 3% by weight of PS was added thereto, and this was used as an electrolyte solution for the combustion test. A discharge capacity test was conducted by using the same positive pole and negative pole as those of Example 1, except for the electrolyte solution. The test results are shown in Table 1.

### <Comparison Example 8>

LiPF₆ was dissolved in a solution in which TMP and EC/DEC (3:7) as a carbonate organic solvent were mixed in a volume ratio of 40:60 (TMP/EC/DEC=40/18/42), in such an amount as to give a concentration of 1.0 mol/L (1.0 M), 10% by weight of VC was added thereto, and this was used as an electrolyte solution for the combustion test. A discharge capacity test was conducted by using the same positive pole and negative pole as those of Example 1, except for the electrolyte solution. The test results are shown in Table 1.

### <Comparison Example 9>

LiPF₆ was dissolved in a solution in which TMP and EC/DEC (3:7) as a carbonate organic solvent were mixed in a volume ratio of 40:60 (TMP/EC/DEC=40/18/42), in such an amount as to give a concentration of 1.0 mol/L (1.0 M), 10% by weight of PS was added thereto, and this was used as an electrolyte solution for the combustion test. A discharge capacity test was conducted by using the same positive pole and negative pole as those of Example 1, except for the electrolyte solution. The test results are shown in Table 1.

### <Comparison Example 10>

LiBETI was dissolved in a solution in which TMP and EC/DEC (3:7) as a carbonate organic solvent were mixed in a volume ratio of 40:60 (TMP/EC/DEC=40/18/42), in such an amount as to give a concentration of 2.0 mol/L (2.0 M), 10% by weight of VC was added thereto, and this was used as an electrolyte solution for the combustion test. A discharge capacity test was conducted by using the same positive pole and negative pole as those of Example 1, except for the electrolyte solution. The test results are shown in Table 1.

### <Comparison Example 11>

LiBETI was dissolved in a solution in which TMP and EC/DEC (3:7) as a carbonate organic solvent were mixed in a volume ratio of 40:60 (TMP/EC/DEC=40/18/42), in such an amount as to give a concentration of 2.0 mol/L (2.0 M), 2% by weight of VC was added thereto, 8% by weight of VEC was added thereto, and this was used as an electrolyte solution for the combustion test. A discharge capacity test was conducted by using the same positive pole and negative pole as those of Example 1, except for the electrolyte solution. The test results are shown in Table 1.

### <Comparison Example 12>

LiBETI was dissolved in a solution in which TMP and EC/DEC (3:7) as a carbonate organic solvent were mixed in a volume ratio of 40:60 (TMP/EC/DEC=40/18/42), in such an amount as to give a concentration of 2.0 mol/L (2.0 M), 2% by weight of VC was added thereto, 8% by weight of VEC was added thereto, and further 5% by weight of cyclohexane (hereafter, abbreviated as CH) was added thereto. This was used as an electrolyte solution for the combustion test. A discharge capacity test was conducted by using the same positive pole and negative pole as those of Example 1, except for the electrolyte solution. The test results are shown in Table 1.

### <Comparison Example 13>

LiTFSI was dissolved in EC/DEC (3:7) as a carbonate organic solvent, in such an amount as to give a concentration of 1.0 mol/L (1.0 M), and this was used as an electrolyte solution for the combustion test. A discharge capacity test was conducted by using the same positive pole and negative pole as those of Example 1, except for the electrolyte solution. The test results are shown in Table 1.

### <Comparison Example 14>

LiPF₆ was dissolved in EC/DEC (3:7) as a carbonate organic solvent, in such an amount as to give a concentration of 1.0 mol/L (1.0 M), and this was used as an electrolyte solution for the combustion test. A discharge capacity test was conducted by using the same positive pole and negative pole as those of Example 1, except for the electrolyte solution. The test results are shown in Table 1.

The results of the combustion tests of electrolyte solutions on the samples of Examples 1 to 27, Comparison Examples 1 to 14, and evaluation results of discharge capacity of the coin-type secondary batteries are shown in Table 1. The results of the combustion tests of the electrolyte solutions are indicated as "flammable" or "non-flammable" in the column of "Flammability" in Table 1. The evaluation results of discharge capacity of the coin-type secondary batteries are each indicated by a capacity value provided by the initial discharge capacity.

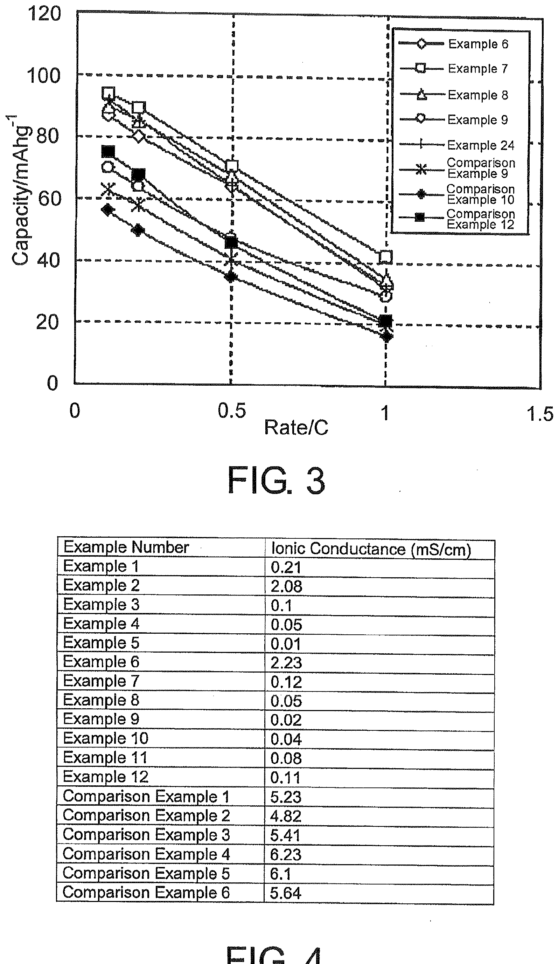

The evaluation results of the rate characteristic tests on the samples of Examples 6 to 9, and 24, and Comparison Examples 9, 10, and 12 are shown in Fig. 3.

The evaluation results of ionic conductance on the electrolyte solutions of Examples 1 to 12, and Comparison Examples 1 to 6 are shown in Fig. 4.

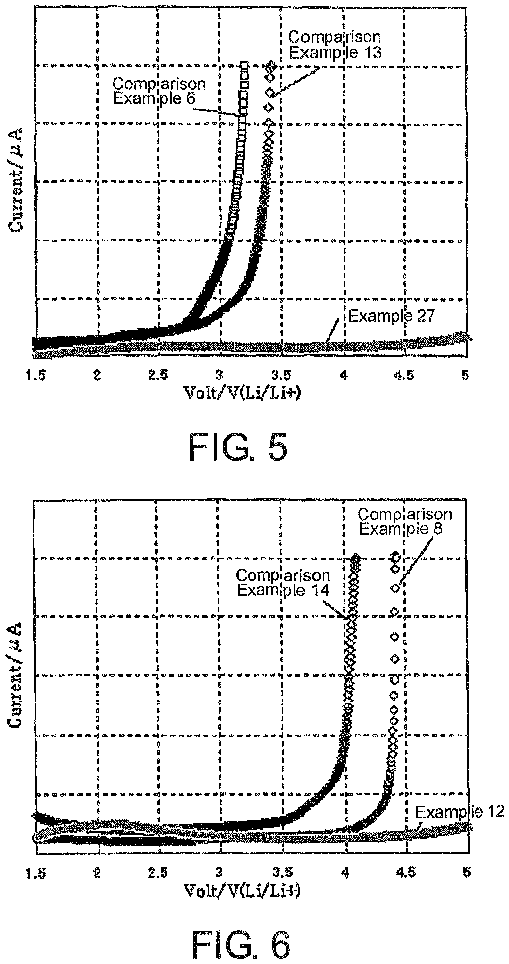

The evaluation results of LV measurements on the electrolyte solutions of Example 27, and Comparison Examples 6 and 13 are shown in Fig. 5, while the evaluation results of LV measurements on the electrolyte solutions of Example 12, and Comparison Examples 8 and 14 are shown in Fig. 6.

**[Table 1] (To be continued)**

| | Phosphate ester derivative | Carbonate organic solvent | Composition ratio (volume ratio) | | Li-salt | Concentration (mol/L) | Additive | Flammability | Discharge capacity (mAh/g) |
|---|---|---|---|---|---|---|---|---|---|
| | X | Y | X | Y | | | | | Initial discharge |
| Example 1 | TMP | | 100 | | LiTFSI | 2.5 | | Non-flammable | 51 |
| Example 2 | TMP | EC:DEC(3:7) | 60 | 40 | LiTFSI | 2 | | Non-flammable | 60 |
| Example 3 | TMP | EC:DEC(3:7) | 60 | 40 | LiTFSI | 2.5 | | Non-flammable | 101 |
| Example 4 | TMP | EC:DEC(3:7) | 60 | 40 | LiTFSI | 3 | | Non-flammable | 98 |
| Example 5 | TMP | EC:DEC(3:7) | 60 | 40 | LiTFSI | 3.5 | | Non-flammable | 102 |
| Example 6 | TMP | EC:DEC(3:7) | 40 | 60 | LiTFSI | 2 | | Non-flammable | 110 |
| Example 7 | TMP | EC:DEC(3:7) | 40 | 60 | LiTFSI | 2.5 | | Non-flammable | 108 |
| Example 8 | TMP | EC:DEC(3:7) | 40 | 60 | LiTFSI | 3 | | Non-flammable | 106 |
| Example 9 | TMP | EC:DEC(3:7) | 40 | 60 | LiTFSI | 3.5 | | Non-flammable | 104 |
| Example 10 | FDEP | EC:DEC(3:7) | 40 | 60 | LiTFSI | 3 | | Non-flammable | 93 |
| Example 11 | TMP | EC:DEC(3:7) | 40 | 60 | LiBETI | 2.5 | | Non-flammable | 89 |
| Example 12 | TMP | EC:DEC(3:7) | 40 | 60 | LiPF₆ | 2.5 | | Non-flammable | 97 |
| Example 13 | TMP | EC:DEC(3:7) | 30 | 70 | LiTFSI | 1.8 | | Non-flammable | 106 |
| Example 14 | TMP | EC:DEC(3:7) | 25 | 75 | LiTFSI | 1.5 | | Non-flammable | 95 |
| Example 15 | TMP | EC:DEC(3:7) | 20 | 80 | LiTFSI | 1.5 | | Non-flammable | 103 |
| Example 16 | TMP | EC:DEC(3:7) | 40 | 60 | LiTFSI + LiPF₆ | 1.5 + 1 | | Non-flammable | 89 |
| Example 17 | TMP | EC:DEC(3:7) | 40 | 60 | LiTFSI + LiPF₆ | 0.5 + 1.5 | | Non-flammable | 109 |
| Example 18 | TMP | EC:DEC(3:7) | 40 | 60 | LiTFSI | 2 | | Non-flammable | 113 |
| Example 19 | TMP | EC:DEC(3:7) | 40 | 60 | LiTFSI | 2.5 | | Non-flammable | 116 |
| Example 20 | TMP | yBL | 40 | 60 | LiTFSI | 2.5 | | Non-flammable | 109 |
| Example 21 | TMP | DME | 40 | 60 | LiPF₆ | 2.5 | | Non-flammable | 104 |
| Example 22 | TMP | EC:DEC(3:7) | 40 | 60 | LiPF₆ | 2.2 | DD | Non-flammable | 108 |
| Example 23 | TMP | EC:DEC(3:7) | 40 | 60 | LiPF₆ | 2.2 | Succinic anhydride | Non-flammable | 105 |
| Example 24 | TMP | EC:DEC(3:7) | 40 | 60 | LiPF₆ | 2 | PS | Non-flammable | 107 |
| Example 25 | TMP | EC:DEC(3:7) | 40 | 60 | LiPF₆ | 2 | PS+SL | Non-flammable | 108 |
| Example 26 | | EC:DEC(3:7) | | 100 | LiTFSI | 1.5 | | Flammable | 105 |
| Example 27 | | EC:DEC(3:7) | | 100 | LiTFSI | 2 | | Flammable | 109 |
| Example 28 | TfMP | EC:DEC(3:7) | 40 | 60 | LiPF₆ | 2.5 | | Non-flammable | 101 |
| Example 29 | TfMP | EC:DEC(3:7) | 40 | 60 | LiPF₆ | 2 | PS | Non-flammable | 108 |
| Comparison Example 1 | TMP | | 100 | | LiTFSI | 1 | | Non-flammable | 0 |
| Comparison Example 2 | TMP | | 100 | | LiBETI | 1 | VC | Non-flammable | 17 |
| Comparison Example 3 | TMP | EC:DEC(3:7) | 15 | 85 | LiTFSI | 1 | | Flammable | 0 |
| Comparison Example 4 | TMP | EC:DEC(3:7) | 15 | 85 | LiPF₆ | 1 | | Flammable | 107 |
| Comparison Example 5 | TMP | EC:DEC(3:7) | 20 | 80 | LiPF₆ | 1 | | Non-flammable | 0 |
| Comparison Example 6 | TMP | EC:DEC(3:7) | 40 | 60 | LiTFSI | 1 | | Non-flammable | 0 |
| Comparison Example 7 | TMP | EC:DEC(3:7) | 40 | 60 | LiPF₆ | 1 | PS | Non-flammable | 36 |
| Comparison Example 8 | TMP | EC:DEC(3:7) | 40 | 60 | LiPF₆ | 1 | VC | Non-flammable | 47 |
| Comparison Example 9 | TMP | EC:DEC(3:7) | 40 | 60 | LiPF₆ | 1 | PS | Non-flammable | 86 |
| Comparison Example 10 | TMP | EC:DEC(3:7) | 40 | 60 | LiBETI | 2 | VC | Non-flammable | 88 |
| Comparison Example 11 | TMP | EC:DEC(3:7) | 40 | 60 | LiBETI | 2 | VC + VEC | Non-flammable | 89 |
| Comparison Example 12 | TMP | EC:DEC(3:7) | 40 | 60 | LiBETI | 2 | VC + VEC + CH | Non-flammable | 91 |
| Comparison Example 13 | | EC:DEC(3:7) | | 100 | LiTFSI | 1 | | Flammable | 0 |
| Comparison Example 14 | | EC:DEC(3:7) | | 100 | LiPF₆ | 1 | | Flammable | 117 |

### <Evaluation Results of Combustion Tests>

A strip of glass fiber filter paper impregnated with each of the electrolyte solutions was brought close to a flame and then moved away from the flame. It was checked then whether or not a flame was observed on the strip. Results of determination based on such combustion tests are shown in Table 1. It was found that the electrolyte solution comprising only 15% by volume of ester phosphate, and the electrolyte solution in which only 1.0 M of a lithium salt was dissolved were flammable (Comparison Examples 3 and 4). On the other hand, the electrolyte solutions in which 20% by volume or more of a phosphate ester derivative was mixed and 1.5 M or more of a lithium salt was incorporated showed non-flammability (Examples 1 to 25). Consequently, it is determined that a desirable mixing amount of the phosphate ester derivatives is 20% by volume or more.

### <Evaluation Results of Coin-Type Secondary Batteries>

Each of the coin-type secondary batteries fabricated as described above was charged and discharged with a current of 0.073 mA. An initial discharge capacity thus obtained is shown in Table 1. No discharge capacity was observed when the concentration of a lithium salt was 1.0 M for the case of ester phosphate alone, or an electrolyte solution having 20 to 40% of ester phosphate mixed (Comparison Examples 1, 5, and 6). However, for the case of ester phosphate alone, it was found that the discharge capacity could be obtained by mixing a 2.5 M of a lithium salt therewith (Example 1). Further, for the case of an electrolyte solution having 40% of ester phosphate mixed, it was found that the discharge capacity could be obtained by mixing a 2.0 M or more of a lithium salt without adding any film-forming additive, even though the discharge capacity could not be obtained with a 1.0 M of a lithium salt (Examples 2 to 9). As seen from the description above, the phosphate ester derivatives are liquid having poor resistance to reduction. Although it is not known why discharge capacity could be obtained by incorporating a high-concentration lithium salt, it is supposed that decomposition reaction of the phosphate ester derivatives is inhibited by some effect when a high-concentration lithium salt is incorporated. It was also found that, when a negative pole having a film preformed electrochemically on the surface thereof is used, the initial discharge capacity was increased in comparison with a negative pole having no such film formed (Examples 6, 7, 18 and 19). This is presumably because the preliminary formation of a film on the surface of the negative pole reduces irreversible capacity caused by formation of SEI during initial charge and discharge. It is also believed that halogen radicals are generated during combustion by substituting a substituent of ester phosphate with an alkyl halide, whereby combustion is inhibited and thus the non-flammable effect is enhanced. The substitution with the alkyl halide does not decrease the capacity in comparison with the case in which no substitution is done, and in fact an equivalent or more capacity can be obtained (Examples 12, 24, 28, and 29).

It is made possible to obtain a slight capacity even at a lithium salt concentration of 1.0 M by adding a film-forming additive (Comparison Examples 2 and 7). Although the capacity is increased by adding a 10% or more of an additive agent, a satisfactory capacity cannot be obtained (Comparison Examples 8 to 12). This is presumably because the addition of a large amount of additive agent increases the irreversible capacity caused by decomposition of the additive agent. It is determined, based on this result, that the desirable amount of the film-forming additive is 10% or less. It is also desirable to select succinic anhydride, PS, or DD as the additive agent, since a high discharge capacity is obtained and the required additive amount is as small as 5% or less (Examples 22 to 25, Comparison Examples 8 to 12).

Further, it was found, based on the results shown in Fig. 3, that the rate characteristic can be improved by increasing the concentration of the lithium salt (Examples 6 to 9). However, as for the electrolyte solution having a 10% or more additive agent added thereto, the rate characteristic was deteriorated (Comparison Examples 9, 10, and 12). This means that it was found that better rate characteristic can be obtained by setting the concentration of the lithium salt to 2.0 M or more than adding an additive agent to the electrolyte solution. This is presumably because a highly resistive film is formed on the surface of the negative pole by adding 10% or more of VC or the like. In order to prevent the deterioration of the rate characteristic due to the addition of VC, it was found that this problem can be solved by a technology to dissolve a lithium salt of a high concentration. Although the decomposition of the ester phosphate can be inhibited and a certain degree of initial discharge capacity can be obtained by adding 10% or more of an additive agent, the rate characteristic is deteriorated extremely. On the other hand, the electrolyte solution having a high-concentration lithium salt maintains its high rate characteristic and the rate characteristic is not affected as long as the additive amount is 10% or less (Example 24). Additive agents such as PS, DD, and succinic anhydride are more desirable as an additive agent used herein since they provide a high initial discharge capacity even at a small additive amount (Examples 22 to 25, Comparison Examples 10 to 12), and substantially no deterioration occurs in the rate characteristic.

As seen from Fig. 4, the ionic conductance becomes low when the concentration of the lithium salt is high (Examples 1 to 12, Comparison Examples 1 to 6). Therefore, in view of motion of lithium ions, it is generally more desirable that the concentration of the lithium ions in the electrolyte solution is lower. However, when a large amount of a phosphate ester derivative is incorporated, the battery will not operate if the concentration of the lithium salt is 1.0 M (Comparison Examples 1 and 5).

An optimum concentration of a lithium salt depends on the content of a phosphate ester derivative. In general, the concentration of the lithium salt is preferably more than 1.5 M and 3.5 M or less. More preferably, it is more than 1.8 M. In order to improve the rate characteristic, it is desirably 2.0 M or more.

It was also found that it is made possible to obtain an initial discharge capacity by dissolving 1.5 M or more of LiTFSI salt (Examples 26 and 27, Comparison Examples 6 and 13). It is not known why the battery does not operate when the concentration of LiTFSI salt is 1.0 M, but operates when it is 1.5 M or 2.0 M. A LV measurement using aluminum as the working electrode revealed that no current peak caused by corrosion reaction of the aluminum collector was observed in an electrolyte solution comprising 2.0 M of LiTFSI salt (Fig. 5). Based on this, it is presumed that one of the factors for capacity improvement is that the corrosion reaction with the aluminum collector is inhibited by increasing the concentration of the lithium salt. By the measures as described above, the range of options to select a lithium salt for the electrolyte for secondary batteries can be expanded by dissolving the lithium salt at a concentration of 1.5 M or more. It is desirable to dissolve 2.0 M or more in order to increase the discharge capacity.

As shown in Fig. 6, as for the electrolyte solution in which 1.0 M of LiPF₆ is dissolved in EC:DEC, current is observed near 4.0 V (Li/Li+) which is presumably derived from corrosion current of aluminum. Also as for the electrolyte solution in which TMP and an additive agent are added described in Comparison Example 9, current can be observed near 4.3 V (Li/Li+). Therefore, it is difficult to use such electrolyte solutions for future high-voltage high-potential batteries (5.0 V or more), now that they react with aluminum near 4.0 V (Li/Li+). On the other hand, the electrolyte solution of Example 12 having 2.5 M of LiPF₆ dissolved therein does not induce corrosion reaction with aluminum even at 5.0 V (Li/Li+) or more. Accordingly, it can be said that the electrolyte solution having a high-concentration lithium salt dissolved therein is an electrolyte solution having improved resistance to oxidation.

As described above, the secondary battery according to this invention enables the use of a non-flammable electrolyte solution, and thus the secondary battery is allowed to have even greater discharge capacity. The secondary battery according to this invention has at least a positive pole, a negative pole, and an electrolyte solution. The positive pole is formed of an oxide for storing and releasing lithium ions, and the negative pole is formed of a material for storing and releasing lithium ions. The electrolyte solution is characterized by comprising a phosphate ester derivative and a high-concentration lithium salt at the same time. The electrolyte solution can be made non-flammable by combining these two components appropriately, whereby the secondary battery is allowed to have even higher discharge capacity and rate characteristic.

Although any suitable lithium salt can be used in the secondary battery according to this invention, it is more desirable to select LiTFSI or LiPF₆ salt having high ionic conductance and high discharge capacity than to select LiBETI (Examples 7, 11, and 12). Further, two or more different lithium salts may be comprised together in the electrolyte solution (Examples 16 and 17).

If the mixing ratio of the phosphate ester derivative is too high, the concentration of the lithium salt must be increased. Therefore, the mixing ratio of the phosphate ester derivative is 60% by volume or less.

While the electrolyte solution is made non-flammable by incorporating 20% by volume or more of a phosphate ester derivative, it is desirable to increase the mixing ratio of the phosphate ester derivative as much as possible in order to obtain a high non-flammable effect, and hence more than 20% by volume of the phosphate ester derivative should be mixed. More desirably, 25% by volume or moreof the phosphate ester derivative is mixed.

This invention is characterized in that the battery characteristics are improved by increasing the concentration of a lithium salt in the electrolyte solution. Since the solubility of the lithium salt is increased by increasing the content of the phosphate ester derivative, the content of the phosphate ester derivative can be increased to improve the battery characteristics. Therefore, in order to achieve balance with the battery characteristics, the mixing ratio of the ester phosphate is preferably 30% by volume or more and, more preferably 40% by volume or more.

Further, when an additive agent is added to the electrolyte solution comprising a high-concentration lithium salt, the additive amount must be less than 10% in order to avoid deterioration of the rate characteristic. Examples of additive agents capable of providing a better effect with a smaller amount may include PS and succinic anhydride not comprising a carbon-carbon double bond in the molecules.

### Industrial Applicability

Although this invention has been described based on the embodiments and Examples, the invention is not limited to the aforementioned embodiments and Examples. Those skilled in the art will recognize many variations and modifications are possible for configurations and particulars of the invention within the scope of the invention.

## Claims

1. A secondary battery comprising;
a positive pole comprising an oxide for storing and releasing lithium ions,
a negative pole comprising a material for storing and releasing lithium ions, and
an electrolyte solution, comprising 1.5 mol/L or more of a lithium salt, 20 % by volume or more but less than 60 % by volume of a phosphate ester derivative.

2. The secondary battery as claimed in Claim 1, **characterized in that** the concentration of the lithium salt is 2.0 mol/L or more but not more than 3.5 mol/L.

3. The secondary battery as claimed in Claim 1 or 2, **characterized in that** the electrolyte solution comprises a carbonate organic solvent.

4. The secondary battery as claimed in either one of Claims 1 to 3, **characterized in that** the phosphate ester derivative is trimethyl phosphate, or a compound represented by the following Chemical Formula (A): 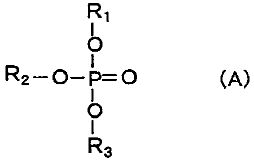 (wherein R₁, R₂, and R₃ may be the same or different, each denoting any one of an alkyl group having 10 or less carbon atoms, an alkyl halide group, an alkenyl group, a cyano group, a phenyl group, an amino group, a nitro group, an alkoxy group, a cycloalkyl group, and a silyl group).

5. The secondary battery as claimed in any one of Claims 1 to 4, characterrized in that the negative pole comprises a film electrochemically formed on the surface thereof.

6. The secondary battery as claimed in any one of Claims 1 to 5, characterrized in that the electrolyte solution comprises at least two or more different lithium salts.

7. The secondary battery as claimed in any one of Claims 1 to 6, **characterized in that** the electrolyte solution comprises less than 10 wt % of a film-forming additive.

8. A charge/discharge method using the secondary battery as claimed in any one of Claims 1 to 7.

9. A method of manufacturing a secondary battery **characterized by** preparing a positive pole and a negative, and injecting an electrolyte solution comprising 1.5 mol/L or more of a lithium salt and 25 % by volume or more but less than 60 % by volume of a phosphate ester derivative between the positive pole and the negative pole.

10. The method of manufacturing a secondary battery as claimed in Claim 9, **characterized in that** the lithium salt is lithium (tetrafluorosulfonyl) imide (LiTFSI).

11. The method of manufacturing a secondary battery as claimed in Claim 9 or 10, **characterized in that** the concentration of the lithium salt is 2.0 mol/L or more.

12. The method of manufacturing a secondary battery as claimed in any one of Claims 9 to 11, **characterized in that** the concentration of the lithium salt is 2.0 mol/L or more but not more than 3.5 mol/L.

13. The method of manufacturing a secondary battery as claimed in any one of Claims 9 to 12, **characterized by** injecting an electrolyte solution comprising a carbonate organic solvent.

14. The method of manufacturing a secondary battery as claimed in Claim 9, **characterized in that** the phosphate ester derivative is trimethyl phosphate or a compound represented by the following Chemical Formula (A): 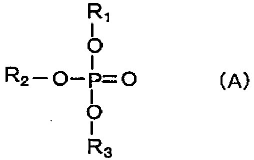 (wherein R₁, R₂, and R₃ may be the same or different, each denoting any of an alkyl group having 10 or less carbon atoms, an alkyl halide group, an alkenyl group, a cyano group, a phenyl group, an amino group, a nitro group, an alkoxy group, a cycloalkyl group, and a silyl group).

15. The method of manufacturing a secondary battery as claimed in any one of Claims 9 to 14, **characterized by** injecting an electrolyte solution comprising at least two or more different lithium salts.

16. The method of manufacturing a secondary battery as claimed in any one of Claims 9 to 15, **characterized by** injecting an electrolyte solution comprising a film-forming additive.

## Patentansprüche

1. Sekundärbatterie, die Folgendes umfasst:
einen Pluspol, der ein Oxid zum Speichern und Freisetzen von Lithiumionen umfasst,
einen Minuspol, der ein Material zum Speichern und Freisetzen von Lithiumionen umfasst, und
eine Elektrolytlösung, die 1,5 mol/L oder mehr eines Lithiumsalzes, 20 Vol.-% oder mehr, aber weniger als 60 Vol.-% eines Phosphatesterderivats umfasst.

2. Sekundärbatterie gemäß Anspruch 1, **dadurch gekennzeichnet, dass** die Konzentration des Lithiumsalzes 2,0 mol/L oder mehr, aber nicht mehr als 3,5 mol/L beträgt.

3. Sekundärbatterie gemäß Anspruch 1 oder 2, **dadurch gekennzeichnet, dass** die Elektrolytlösung ein organisches Carbonatlösungsmittel umfasst.

4. Sekundärbatterie gemäß einem der Ansprüche 1 bis 3, **dadurch gekennzeichnet, dass** das Phosphatesterderivat Trimethylphosphat ist oder eine Verbindung, die durch die folgende chemische Formel (A) dargestellt wird: 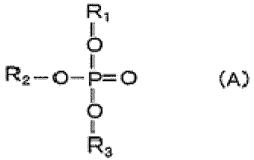 (wobei R₁, R₂ und R₃ gleich oder unterschiedlich sein können, wobei jedes eines von einer Alkylgruppe mit 10 oder weniger Kohlenstoffatomen, einer Alkylhalogenidgruppe, einer Alkenylgruppe, einer Cyanogruppe, einer Phenylgruppe, einer Aminogruppe, einer Nitrogruppe, einer Alkoxygruppe, einer Cycloalkylgruppe und einer Silylgruppe bezeichnet).

5. Sekundärbatterie gemäß einem der Ansprüche 1 bis 4, **dadurch gekennzeichnet, dass** der Minuspol einen Film umfasst, der elektrochemisch auf seiner Oberfläche gebildet wurde.

6. Sekundärbatterie gemäß einem der Ansprüche 1 bis 5, **dadurch gekennzeichnet, dass** die Elektrolytlösung mindestens zwei oder mehr unterschiedliche Lithiumsalze umfasst.

7. Sekundärbatterie gemäß einem der Ansprüche 1 bis 6, **dadurch gekennzeichnet, dass** die Elektrolytlösung weniger als 10 Gewichtsprozent eines filmbildenden Additivs umfasst.

8. Lade-/Entladeverfahren unter Verwendung der Sekundärbatterie gemäß einem der Ansprüche 1 bis 7.

9. Verfahren zur Herstellung einer Sekundärbatterie, **gekennzeichnet durch** Herstellen eines Pluspols und eines Minuspols und Injizieren einer Elektrolytlösung, die 1,5 mol/L oder mehr eines Lithiumsalzes und 25 Vol.-% oder mehr, aber weniger als 60 Vol.-% eines Phosphatesterderivats umfasst, zwischen dem Pluspol und dem Minuspol.

10. Verfahren zur Herstellung einer Sekundärbatterie gemäß Anspruch 9, **dadurch gekennzeichnet, dass** das Lithiumsalz Lithium(tetrafluorsulfonyl)imid (LiTFSI) ist.

11. Verfahren zur Herstellung einer Sekundärbatterie gemäß Anspruch 9 oder 10, **dadurch gekennzeichnet, dass** die Konzentration des Lithiumsalzes 2,0 mol/L oder mehr beträgt.

12. Verfahren zur Herstellung einer Sekundärbatterie gemäß einem der Ansprüche 9 bis 11, **dadurch gekennzeichnet, dass** die Konzentration des Lithiumsalzes 2,0 mol/L oder mehr, aber nicht mehr als 3,5 mol/L beträgt.

13. Verfahren zur Herstellung einer Sekundärbatterie gemäß einem der Ansprüche 9 bis 12, **gekennzeichnet durch** Injizieren einer Elektrolytlösung, die ein organisches Carbonatlösungsmittel umfasst.

14. Verfahren zur Herstellung einer Sekundärbatterie gemäß Anspruch 9, **dadurch gekennzeichnet, dass** das Phosphatesterderivat Trimethylphosphat ist oder eine Verbindung, die durch die folgende chemische Formel (A) dargestellt wird: 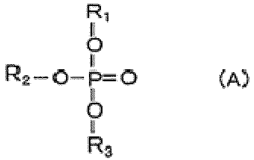 (wobei R₁, R₂ und R₃ gleich oder unterschiedlich sein können, wobei jedes eines von einer Alkylgruppe mit 10 oder weniger Kohlenstoffatomen, einer Alkylhalogenidgruppe, einer Alkenylgruppe, einer Cyanogruppe, einer Phenylgruppe, einer Aminogruppe, einer Nitrogruppe, einer Alkoxygruppe, einer Cycloalkylgruppe und einer Silylgruppe bezeichnet).

15. Verfahren zur Herstellung einer Sekundärbatterie gemäß einem der Ansprüche 9 bis 14, **gekennzeichnet durch** Injizieren einer Elektrolytlösung, die mindestens zwei oder mehr unterschiedliche Lithiumsalze umfasst.

16. Verfahren zur Herstellung einer Sekundärbatterie gemäß einem der Ansprüche 9 bis 15, **gekennzeichnet durch** Injizieren einer Elektrolytlösung, die ein filmbildendes Additiv umfasst.

## Revendications

1. Pile rechargeable (secondaire), comprenant ;
un pôle positif comprenant un oxyde pour stocker et libérer des ions lithium,
un pôle négatif comprenant un matériau pour stocker et libérer des ions lithium, et
une solution d'électrolyte, comprenant 1,5 mole/L ou plus d'un sel de lithium, 20 % en volume ou plus mais moins de 60 % en volume d'un dérivé d'ester phosphate.

2. Pile rechargeable (secondaire) selon la revendication 1, **caractérisée en ce que** la concentration du sel de lithium est de 2,0 moles/L ou plus mais pas plus de 3,5 moles/L.

3. Pile rechargeable (secondaire) selon la revendication 1 ou 2, **caractérisée en ce que** la solution d'électrolyte comprend un solvant organique carbonate.

4. Pile rechargeable (secondaire) selon l'une quelconque des revendications 1 à 3, **caractérisée en ce que** le dérivé d'ester phosphate est le phosphate de triméthyle, ou un composé représenté par la Formule chimique (A) suivante : 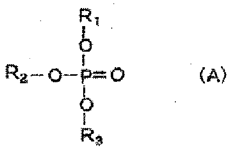 (dans laquelle R₁, R₂ et R₃ peuvent être identiques ou différents, chacun représentant l'un quelconque parmi un groupe alkyle ayant 10 atomes de carbone ou moins, un groupe halogénure d'alkyle, un groupe alcényle, un groupe cyano, un groupe phényle, un groupe amino, un groupe nitro, un groupe alcoxy, un groupe cycloalkyle et un groupe silyle).

5. Pile rechargeable (secondaire) selon l'une quelconque des revendications 1 à 4, **caractérisée en ce que** le pôle négatif comprend un film formé électrochimiquement sur la surface de celui-ci.

6. Pile rechargeable (secondaire) selon l'une quelconque des revendications 1 à 5, **caractérisée en ce que** la solution d'électrolyte comprend au moins deux sels de lithium différents ou plus.

7. Pile rechargeable (secondaire) selon l'une quelconque des revendications 1 à 6, **caractérisée en ce que** la solution d'électrolyte comprend moins de 10 % en poids d'un additif filmogène.

8. Procédé de charge/décharge utilisant la pile rechargeable (secondaire) selon l'une quelconque des revendications 1 à 7.

9. Procédé de fabrication d'une pile rechargeable (secondaire), **caractérisé par** la préparation d'un pôle positif et d'un négatif, et l'injection d'une solution d'électrolyte comprenant 1,5 mole/L ou plus d'un sel de lithium et 25 % en volume ou plus mais moins de 60 % en volume d'un dérivé d'ester phosphate entre le pôle positif et le pôle négatif.

10. Procédé de fabrication d'une pile rechargeable (secondaire) selon la revendication 9, **caractérisé en ce que** le sel de lithium est le lithium(tétrafluorosulfonyl)imide (LiTFSI).

11. Procédé de fabrication d'une pile rechargeable (secondaire) selon la revendication 9 ou 10, **caractérisé en ce que** la concentration du sel de lithium est de 2,0 moles/L ou plus.

12. Procédé de fabrication d'une pile rechargeable (secondaire) selon l'une quelconque des revendications 9 à 11, **caractérisé en ce que** la concentration du sel de lithium est de 2,0 moles/L ou plus mais de pas plus de 3,5 moles/L.

13. Procédé de fabrication d'une pile rechargeable (secondaire) selon l'une quelconque des revendications 9 à 12, **caractérisé par** l'injection d'une solution d'électrolyte comprenant un solvant organique carbonate.

14. Procédé de fabrication d'une pile rechargeable (secondaire) selon la revendication 9, **caractérisé en ce que** le dérivé d'ester phosphate est le phosphate de triméthyle ou un composé représenté par la Formule chimique (A) suivante : 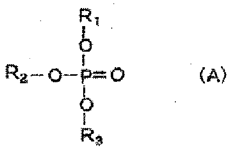 (dans laquelle R₁, R₂ et R₃ peuvent être identiques ou différents, chacun représentant l'un quelconque parmi un groupe alkyle ayant 10 atomes de carbone ou moins, un groupe halogénure d'alkyle, un groupe alcényle, un groupe cyano, un groupe phényle, un groupe amino, un groupe nitro, un groupe alcoxy, un groupe cycloalkyle et un groupe silyle).

15. Procédé de fabrication d'une pile rechargeable (secondaire) selon l'une quelconque des revendications 9 à 14, **caractérisé par** l'injection d'une solution d'électrolyte comprenant au moins deux sels de lithium différents ou plus.

16. Procédé de fabrication d'une pile rechargeable (secondaire) selon l'une quelconque des revendications 9 à 15, **caractérisé par** l'injection d'une solution d'électrolyte comprenant un additif filmogène.
